Europäisches Patentamt

European Patent Office

Office européen des brevets

(19)

(11) **EP 1 310 806 A1**

(12) **EUROPEAN PATENT APPLICATION**
published in accordance with Art. 158(3) EPC

(43) Date of publication:
**14.05.2003 Bulletin 2003/20**

(21) Application number: **01954388.3**

(22) Date of filing: **31.07.2001**

(51) Int Cl.7: **G02B 5/30**

(86) International application number:
**PCT/JP01/06588**

(87) International publication number:
**WO 02/012929 (14.02.2002 Gazette 2002/07)**

(84) Designated Contracting States:
**AT BE CH CY DE DK ES FI FR GB GR IE IT LI LU MC NL PT SE TR**

(30) Priority: **07.08.2000 JP 2000238829**

(71) Applicant: **Nippon Sheet Glass Co., Ltd.
Osaka-shi, Osaka 541-8559 (JP)**

(72) Inventors:
• **KAWAZU, Mitsuhiro
Chuou Osaka-shi Osaka 541-8559 (JP)**
• **YAMAMOTO, Hiroaki
Chuou Osaka-shi Osaka 541-8559 (JP)**

(74) Representative: **Albrecht, Thomas, Dr. et al
Kraus & Weisert,
Thomas-Wimmer-Ring 15
80539 München (DE)**

(54) **POLARIZATION ELEMENT AND METHOD FOR PREPARATION THEREOF**

(57)     There is disclosed a manufacturing method of a large-area polarization element (10) whose film formed on a surface has an excellent adhesion. The method includes the steps of: forming an under film (12) on a glass substrate (11); coating the under film (12) with a metal dispersion; heating the metal dispersion; and forming a metal dispersed film (13) containing a fine metal particle (14). When the metal dispersion is heated, a noble metal ion in the metal dispersion is reduced to generate the fine metal particle (14). The fine metal particle (14) interacts with the under film (12), and is localized in the vicinity of an interface (16) of the under film (12) and metal dispersed film (13).

# Fig.1

EP 1 310 806 A1

**Description**

Technical Field

The present invention relates to a polarization element for use in optical communication, optical recording, optical sensor, and the like and a method for manufacturing the element.

Background Art

In the manufacturing method of a first conventional polarization element, thin-film forming processes such as vacuum deposition and sputtering are used to alternately laminate discontinuous island-shaped metal layers and dielectric layers on a substrate of glass or the like. Subsequently, the substrate is stretched at a temperature which is not lower than a softening point of the substrate. Thereby, the discontinuous island-shaped metal particle layers are oriented in a stretched direction, and deformed into elliptical particles arranged in the same direction. As a result, a polarization element having polarization properties is obtained.

In the manufacturing method of a second conventional polarization element, a thin-film forming process is used to alternately laminate dielectric thin films and metal thin films in 100 layers or more in total, so that a multilayered polarization element having polarization properties is obtained.

However, in the manufacturing method of the first conventional polarization element, since the substrate is stretched and the metal particle layer is formed, deformation and roughness of alternately laminated film surfaces are generated after heat stretching. This causes problems such as deterioration of polarization properties of the polarization element and an increase of loss by scattering or the like. In the second conventional laminated polarization element, since adhesion of the thin metal film to the thin dielectric film is relatively weak, the thin films are easily stripped. Moreover, since the thin-film forming processes such as vacuum deposition and sputtering are necessary for forming the metal layer on the substrate of glass or the like, the manufacturing cost of the polarization element has been relatively high. Since a polarization surface of the polarization element manufactured by the first and second conventional methods is relatively small, the use has been limited.

Disclosure of the Invention

An object of the present invention is to provide a polarization element which is inexpensive, excellent in adhesion of a thin film, and has a relatively large polarization area.

In order to achieve the object, according to the present invention, there is provided a manufacturing method of a polarization element. The method includes the steps of: first forming an under film containing a component which attracts a fine metal particle on a transparent substrate; coating the under film with a metal dispersion and forming a metal dispersed film; and depositing the fine metal particle in a film interface between the under film and the metal dispersed film.

According to another aspect of the present invention, there is provided a manufacturing method of a polarization element, including the step of first forming an under film which contains at least one compound selected from the group consisting of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide as a main component on a transparent substrate. Subsequently, the method includes the step of preparing a metal dispersion which contains a compound of at least one element selected from the group consisting of silicon, zirconium, titanium, cerium, tin, bismuth, cobalt, copper, aluminum, magnesium, manganese, chromium, indium, vanadium, iron, nickel, zinc, tungsten, tantalum, hafnium, barium, ytterbium, niobium, molybdenum, yttrium, ruthenium, germanium, lead, and boron, and a fine metal particle source as main components. The under film is coated with the metal dispersion, the metal dispersion is subjected to at least one of heating and electromagnetic wave irradiation, and a metal dispersed film is formed in which a fine metal particle is localized in a film interface between the under film and the metal dispersed film.

The under film preferably contains at least one of silicon oxide and zirconium oxide.

The step of forming the under film preferably includes the step of preparing an under solution so that the under film contains 2 to 100 mass% of at least one compound selected from the group consisting of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide, and 0 to 98 mass% of at least one compound selected from the group consisting of silicon oxide and zirconium oxide.

The step of preparing the metal dispersion preferably includes a step of blending components so that the metal dispersed film contains 0.2 to 50 mass% of the fine metal particle, and contains 50 to 99.8 mass% of at least one compound selected from the group consisting of silicon oxide, zirconium oxide, titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide.

The fine metal particle is preferably a noble metal.

The metal dispersion preferably contains a metal ion which generates the fine metal particle by reduction.

According to another aspect of the present invention, there is provided a manufacturing method of a polarization element, first including the step of forming an under film on a transparent substrate. A metal dispersed film containing a fine metal particle is formed on the under film. The fine metal particle is localized in a film interface between the metal dispersed film and the under film.

The fine metal particle is preferably localized by heating the metal dispersed film.

The fine metal particle is preferably localized by irradiating the metal dispersed film with an electromagnetic wave.

According to still another aspect of the present invention, there is provided a polarization element having a transparent substrate. The polarization element includes an under film formed on the transparent substrate and containing a component which attracts a fine metal particle, and a metal dispersed film formed on the under film. The metal dispersed film includes the fine metal particle localized in a film interface between the under film and the metal dispersed film.

The under film contains at least one compound selected from the group consisting of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide as a main component. The metal dispersed film preferably contains 0.2 to 50 mass% of the fine metal particle, and contains 50 to 99.8 mass% of at least one compound selected from the group consisting of silicon oxide, zirconium oxide, titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide.

The under film preferably contains at least one of silicon oxide and zirconium oxide.

Brief Description of the Drawings

FIG. 1 is a schematic sectional view of a polarization element according to a first embodiment of the present invention.

FIG. 2 is a schematic diagram of fine metal particles in the polarization element of FIG. 1.

FIG. 3 is a schematic diagram showing the polarization element according to a second embodiment of the present invention.

FIG. 4 is a schematic diagram showing the polarization element according to a third embodiment of the present invention.

FIG. 5 is a schematic diagram showing the polarization element according to a fourth embodiment of the present invention.

FIG. 6 is a schematic diagram showing the polarization element according to a fifth embodiment of the present invention.

Best Mode for Carrying out the Invention

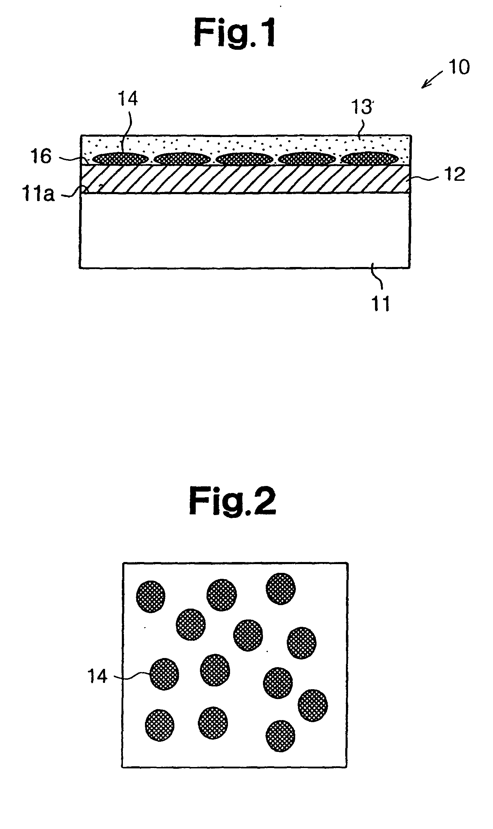

A polarization element 10 according to a first embodiment of the present invention will be described. As shown in FIGS. 1 and 2, the polarization element 10 includes a glass substrate 11, an under film 12 formed on upper surface or a reference surface 11a of the glass substrate 11, and a metal dispersed film 13 formed on the under film 12 and containing fine metal particles 14. The under film 12 is formed from an under solution containing at least one compound selected from an under film material group A and/or B as a main component. The under film material group A consists of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide. The under film material group B consists of silicon oxide and zirconium oxide.

The metal dispersed film 13 is formed as follows. A metal dispersion is prepared which contains a fine metal particle source for generating the fine metal particles 14, and a material compound containing at least one element selected from the element group consisting of silicon, zirconium, titanium, cerium, tin, bismuth, cobalt, copper, aluminum, magnesium, manganese, chromium, indium, vanadium, iron, nickel, zinc, tungsten, tantalum, hafnium, barium, ytterbium, niobium, molybdenum, yttrium, ruthenium, germanium, lead, and boron as main components. The under film 12 is coated with the metal dispersion, and treated by heating or electromagnetic wave irradiation. Thereby, the fine metal particles 14 having shape anisotropic properties are locally deposited in the vicinity of an interface 16 of the under film 12 and metal dispersed film 13. It should be noted that the fine particle having the shape anisotropic properties means a fine particle whose aspect ratio exceeds 1.

The phenomenon in which the fine metal particles 14 are deposited in the interface 16 can be described with reference to preparation of a glass plate coated with a colored film in accordance with a sol-gel method. That is, in the sol-gel method, the fine metal particles are dispersed in a silica matrix. As described in J. Sol-Gel Sci. Techn. 1, 305 to 312 (1994), during drying of sol, growth of the fine metal particles, and contraction of the matrix occur at the same time. Therefore, a mesh structure of the silica matrix rapidly contracts, and the fine metal particles are expelled out of the film. Then, in the first embodiment, during hardening of the sol containing the fine metal particle source, a deposition behavior of the fine metal particles is noted, and the fine metal particles 14 are localized in the interface 16 of the under film 12 and metal dispersed film 13.

Moreover, a reason why the fine metal particles 14 are localized in the vicinity of the interface 16 supposedly lies in an interaction (e.g., electrostatic action) of the metal in the metal dispersed film 13, and the under film 12. In detail, the metal in the metal dispersed film 13 is supposedly attracted by the under film 12 before the hardening of the sol, and the fine metal particles 14 gather in the interface 16. Therefore, in the first embodiment, the phenomenon is combined with the deposition behavior of the fine metal particles in the process of hardening of the sol containing the fine metal particle source described in the aforementioned sol-gel method, and the fine metal particles 14 are arranged in the interface 16 of the under film 12 and metal dispersed film 13.

A composition of the under film 12 will be described hereinafter.

For the compound contained in the under film material group A, when the fine metal particle source is reduced by heat treatment or electromagnetic wave irradiation of the metal dispersion, the fine metal particles 14 are attracted to the interface 16 of the under film 12 and metal dispersed film 13, and adhesion of the under film 12 to the metal dispersed film 13 is enhanced. For this, when a composition ratio of the compounds selected from the under film material group A is adjusted, the fine metal particle 14, specifically, a particle diameter of the fine metal particle 14 can be controlled. In the under film material group A, titanium oxide, cerium oxide, tin oxide, and bismuth oxide are preferable because of a large action of attracting the fine metal particles.

The compound contained in the under film material group A is converted in the corresponding oxide, that is, each of titanium oxide ($TiO_2$), cerium oxide ($CeO_2$), tin oxide ($SnO_2$), bismuth oxide ($Bi_2O_3$), cobalt oxide ($CoO$), copper oxide ($CuO$), aluminum oxide ($Al_2O_3$), magnesium oxide ($MgO$), manganese oxide ($MnO_2$), chromium oxide ($Cr_2O_3$), indium oxide ($In_2O_3$), vanadium oxide ($V_2O_5$), iron oxide ($Fe_2O_3$), nickel oxide ($NiO$), zinc oxide ($ZnO$), tungsten oxide ($WO_2$), tantalum oxide ($Ta_2O_3$), hafnium oxide ($HfO_2$), barium oxide ($BaO$), ytterbium oxide ($Yb_2O_3$), niobium oxide ($NbO_2$), molybdenum oxide ($MoO_2$), yttrium oxide ($Y_2O_3$), ruthenium oxide ($RuO_2$), germanium oxide ($GeO_2$), lead oxide ($PbO$), and boron oxide ($B_2O_3$), and is preferably contained in the under film 12 in a range of 2 to 100 mass%, more preferably 5 to 100 mass%. When the content is less than 2%, the fine metal particle 14 cannot sufficiently be attracted to the interface 16, and the adhesion of the under film 12 and metal dispersed film 13 is deteriorated.

Moreover, another compound which interacts with the metal 14 in the metal dispersed film 13, for example, the compound included in the under film material group B indicates an action opposite to the action of the under film material group A which attracts the fine metal particle 14. Therefore, the compound included in the under film material group B is mixed with the under film material group A, and the fine metal particle 14, concretely, the particle diameter of the fine metal particle 14 is controlled.

When the compound of the under film material group B is converted in terms of silicon oxide ($SiO_2$) and zirconium oxide ($ZrO_2$), the compound is preferably contained in the under film 12 in an amount of 0 to 98 mass%, more preferably 0 to 95 mass%. When the content exceeds 98%, the fine metal particles 14 are not localized in the interface 16.

Moreover, an organic compound (ligand) which can form coordinate bond with the metal may be added to the under solution. The organic compound can be used to control localization of the fine metal particles 14. Examples of ligands preferably include an organic compound having an amino group, disulfide (S-S) group, or thiol (SH) group.

A composition of the metal dispersion containing the fine metal particle source and the compound of at least one element selected from the metal dispersed film material group as the main components will next be described.

The fine metal particle source is reduced to a single metal by the heat treatment or the electromagnetic wave irradiation, deposited as the fine metal particles 14 in the interface 16 of the metal dispersed film 13 and under film 12, and imparts polarization properties to the element 10. When the content of the fine metal particle source is adjusted, the polarization properties of the polarization element can be controlled. The fine metal particles 14 are preferably noble metals such as gold and silver. Therefore, the fine metal particle source is preferably a noble metal ion such as gold and silver.

The content of the fine metal particles 14 is preferably 0.2 to 50 mass%, more preferably 0.5 to 20 mass%. When the content of the fine metal particles 14 exceeds 50 mass%, the fine metal particles 14 are excessively deposited in the vicinity of the interface 16 of the under film 12 and metal dispersed film 13, and the adhesion of the under film 12 and metal dispersed film 13 is deteriorated. When the content of the fine metal particles 14 is less than 0.2 mass%, the polarization properties of the element 10 become insufficient.

The fine metal particle source generates the fine metal particles 14 by the heat treatment or the irradiation with the electromagnetic wave. For the heating, the fine metal particle source is preferably heated/treated at 200°C or more. When electromagnetic wave irradiation is performed, electromagnetic waves having relatively high energy, such as an ultraviolet ray, are preferably used.

The metal dispersed film 13 contains at least one the compound group consisting of silicon oxide, zirconium oxide, titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide. In the compound group, silicon oxide and zirconium oxide are preferable, because the metal dispersion (sol) is easily prepared, and the following properties can be used.

When the fine metal particles 14 are deposited in the interface 16 of the under film 12 and metal dispersed film 13, silicon oxide is bonded to the under film 12, and the adhesion of the under film 12 and metal dispersed film 13 is enhanced. Moreover, silicon oxide helps the fine metal particles 14 to be deposited in the interface 16. Particularly, the fine metal particle 14 is preferably gold. In detail, when the metal dispersion (sol) is dried, a growth process of the fine metal particles 14 and a contraction process of a material matrix of the metal dispersed film 13 occur at the same time. In this case, since silicon oxide allows the mesh structure of the silica matrix to rapidly contract, the fine metal particles 14 are expelled to the interface 16.

Zirconium oxide is bonded to the under film 12, enhances the adhesion of the under film 12 and metal dispersed film 13 in the similar manner to the case of silicon oxide, and helps the fine metal particles 14 to be deposited in the interface 16. Moreover, zirconium oxide functions as a refractive index adjustment agent. That is, when the content of zirconium oxide is adjusted, the metal dispersed film 13 and refractive index can be controlled.

In consideration of the content of the fine metal particles 14 which produce the polarization properties, the content of the metal dispersed film material compound is preferably contained as oxide in the metal dispersed film 13 in an amount of 50 to 99.8 mass%.

Materials for forming the under film 12 and metal dispersed film 13 will next be described concretely.

The materials will be described in a case in which a thermal decomposition method using a solution as a starting material, and coating methods such as a roll coating method and spin coating method are used as the method of forming the film.

First, among the compounds included in the under film material group, preferable materials of titanium oxide, cerium oxide, tin oxide, bismuth oxide, and the like will be described.

As the material of titanium oxide, titanium organic compounds such as titanium alkoxide, titanium acetyl acetonate, and titanium carboxylate are preferable. Titanium alkoxide is generally represented by $Ti(OR)_4$ (R represents an alkyl group having 4 or less carbon atoms). Taking reactivity into consideration, titanium isopropoxide, and titanium butoxide are preferable. Since a β-diketone alkoxide complex having β-diketone such as acetyl acetonate is relatively stable, it is preferable. The β-diketone alkoxide complex is represented by the general formula: $Ti(OR)_m L_n$ (in which m+2n=4, n≠0, L denotes acetylacetone) and titanium alkoxide is obtained by chelating titanium alkoxide with β-diketone such as acetyl acetonate. Commercially available titanium acetyl acetonate may be used as the material of titanium oxide.

It is also considered that organic acid bases such as acetic acid, propionic acid, and acrylate are used as the material of titanium oxide. As another material of titanium oxide, titanium oxide fine particles are used. Examples include photocatalyst titanium oxide fine particles (manufactured by Ishihara Sangyo Kaisha, Ltd., trade name "STS-01" (particle diameter (measured in X rays) 7 nm), "STS-02" (particle diameter (measured in X rays) 7 nm), "CS-N"); commercially available water dispersion sol such as titania sol "M-6" (crystallite size of 5 nm) manufactured by Taki Chemical Co., Ltd.; and binder-containing commercially available water-alcohol mixed solvent dispersion titania sol such as "ST-K01", "ST-K03" manufactured by Ishihara Sangyo Kaisha, Ltd.

Cerium organic compounds such as cerium alkoxide, cerium acetyl acetonate, and cerium carboxylate are preferable as the material of cerium oxide. In addition, cerium inorganic compounds such as nitrate, sulfate, and chloride can be used, and cerium nitrate and cerium acetyl acetonate are preferred since they have high stability and are readily available.

As the material of tin oxide, organic tin such as $SnCl_4(C_nH_{2n+1})$ (n = 1 to 4), $C_4H_9SnCl_3$, $(CH_3)_2SnCl_2$, and $(C_4H_9)_2Sn(OCOCH_3)$, and organic tin alkoxide such as tin tetrabutoxide can be used.

Preferable examples of the material of bismuth oxide include bismuth nitrate, bismuth sulfate, bismuth chloride, bismuth complex chelated by β-diketone such as acetyl acetone, and bismuth (III) t-pentoxide.

Among the compounds included in the metal dispersed film material group, silicon oxide and zirconium oxide are particularly preferable.

Examples of the material of silicon oxide preferably include metal alkoxides such as tetramethoxysilane, tetraethoxysilane, tetrapropoxysilane, and tetrabutoxysilane. Moreover, a condensate (condensation degree n ≥ 2) of metal alkoxide, or a mixture of the condensate is also preferable. Examples of the condensate of metal alkoxide include hexaethoxydisiloxane (n = 2), octaethoxytrisiloxane (n = 3), decaethoxytetrasiloxane (n = 4), and ethoxypolysiloxane (n ≥ 5). Ethylsilicate 40 of a mixture of a monomer (n = 1) and condensate (n ≥ 2) is preferable [the composition is described in pages 253 to 268 of document of J. Cihlar, Colloids and Surfaces A: Physicochem. Eng. Aspects 70 (1993), and is in percentage by mass a monomer (n = 1): 12.8 mass%, dimer (n = 2): 10.2 mass%, trimer (n = 3): 12.0 mass%, tetramer (n = 4): 7.0 mass%, polymer (n ≥ 5): 56.2 mass%, ethanol: 1.8 mass%]. Furthermore, alkyltrialkoxysilane can also be used which is obtained by replacing an alkoxy group of ethylsilicate 40 with an alkyl group. Example of usable compounds are obtained by replacing the alkoxy group with a straight or branched alkyl group such as a methyl group, ethyl group, propyl group, butyl group, 2-ethylbutyl group, and octyl group, a cycloalkyl group such as a cyclopentyl group and cyclohexyl group, an alkenyl group such as a vinyl group, allyl group, γ-methacryloxypropyl group, and γ-acryloxypropyl group, an aryl group such as a phenyl group, toluyl group, and xylyl group, an aralkyl group such as a benzyl and phenethyl group, γ-mercaptopropyl group, γ-chloropropyl group, γ-aminopropyl group, and the like.

Preferable examples of the material of zirconium oxide include zirconium alkoxides such as tetramethoxy zirconium, tetraethoxy zirconium, tetraisopropoxy zirconium, tetra n-propoxy zirconium, tetraisopropoxy zirconium isopropanol complex, tetraisobutoxy zirconium, tetra n-butoxy zirconium, tetrasec-butoxy zirconium, and tetra t-butoxy zirconium. Zirconium alkoxides obtained by chelating a zirconium alkoxide by a β-ketoester compound is also preferable. Examples of a usable chelating agent include acetoacetic acid esters represented by $CH_3COCH_3COOR$ (R is $CH_3$, $C_2H_5$, $C_3H_7$, or $C_4H_9$), such as methyl acetoacetate, ethyl acetoacetate, propyl acetoacetate, and butyl acetoacetate. Among the acetoacetic acid esters, acetoacetic acid alkyl esters such as methyl acetoacetate and ethyl acetoacetate are particularly preferable because they are relatively inexpensive and readily available. The chelating degree of zirconium alkoxide is partial or whole, and it is preferred to chelate the zirconium alkoxide with (β-ketoester)/(zirconium alkoxide) at a molar ratio of 2, because a stable chelate compound is obtained. The chelating agents other than the β-ketoester compound such as zirconium alkoxide chelated by acetylacetone are insoluble to solvents such as alcohol. Therefore, they are not preferable, because it is difficult to prepare the metal dispersion. Furthermore, it is possible to use alkoxy zirconium organic acid chlorides in which at least one kind of the alkoxy groups of zirconium alkoxide is replaced by organic acids such as acetic acid, propionic acid, butanoic acid, acrylic acid, methacrylic acid, and stearic acid.

The under film 12 is formed directly on the glass substrate 11 in accordance with thin film forming methods such as vacuum deposition and sputtering. The method for forming the under film 12 is not particularly limited. In the thermal decomposition method, spin coating method, or roll coating method, first the material of the under film 12 is dissolved in an organic solvent to prepare the under solution. The transparent glass substrate 11 is coated with the under solution. When the under solution is heated at 200°C to 800°C for 5 to 200 minutes, the under film 12 is formed.

The metal dispersed film 13 is formed as follows. First, the metal dispersed film material is dissolved in the organic solvent and the metal dispersion is prepared. The under film 12 is coated with the metal dispersion. The metal dispersion is heated at 200°C to 800°C for 5 to 200 minutes, or is irradiated with an ultraviolet ray having a wavelength of 1 to 400 nm and an output of 1 μw or more for 0.01 second to 30 minutes. Thereby, the metal dispersed film 13 is formed.

The metal dispersion is preferably applied to the under film 12 according to a casting method, dip coating method, gravure coating method, flexographic printing method, roll coating method, spray coating method, and spin coating method, for example.

The organic solvent for the metal dispersion is selected in accordance with the film forming method. For example, when the casting method or the dip coating method is employed, a solvent having a relatively high evaporation speed is preferable. When a solvent having a low evaporation speed is used, drying of the coat film is delayed, fluidity of the metal dispersion is high, and a uniform coat film is not sometimes formed. Examples of the solvent having the high evaporation speed include alcohol-based solvents such as methanol, ethanol, isopropyl alcohol, and tert-butoxy alcohol. On the other hand, when the gravure coating method, flexographic printing method, and roll coating method are used, the solvent having a low evaporation speed is preferable. With the use of the solvent having the high evaporation speed, the solvent is evaporated before sufficient leveling is performed, and coat appearance sometimes becomes poor. Here, the evaporation speed of the solvent is generally evaluated in accordance with a relative evaporation speed index, when the evaporation speed of butyl acetate is set at 100. The solvent having the relative evaporation speed index of 40 or less is classified as a solvent which is remarkably slow in the evaporation speed. Examples of the organic solvent for the gravure coating method, flexographic printing method, and roll coating method preferably include ethyl Cellosolve, butyl Cellosolve, Cellosolve acetate, diethylene glycol monoethyl ether, hexylene glycol, diethylene glycol, ethylene glycol, tripropylene glycol, diacetone alcohol, and tetrahydrofurfuryl alcohol. The organic solvent for the metal dispersion desirably includes at least one kind of the aforementioned solvents in accordance with the coating method, properties of the metal dispersion, deposition behavior of the fine metal particle, and the like.

As shown in FIG. 1, the fine metal particles 14 are deposited in the vicinity of the interface 16 between the under film 12 and the metal dispersed film 13. Moreover, as shown in FIG. 2, the fine metal particles 14 are arranged along the interface 16 in the same direction, and disposed at random on the under film 12. A specific polarized light is selectively absorbed by the localized fine metal particles 14. Therefore, the polarization element 10 according to the first embodiment has polarization properties dependent on the direction.

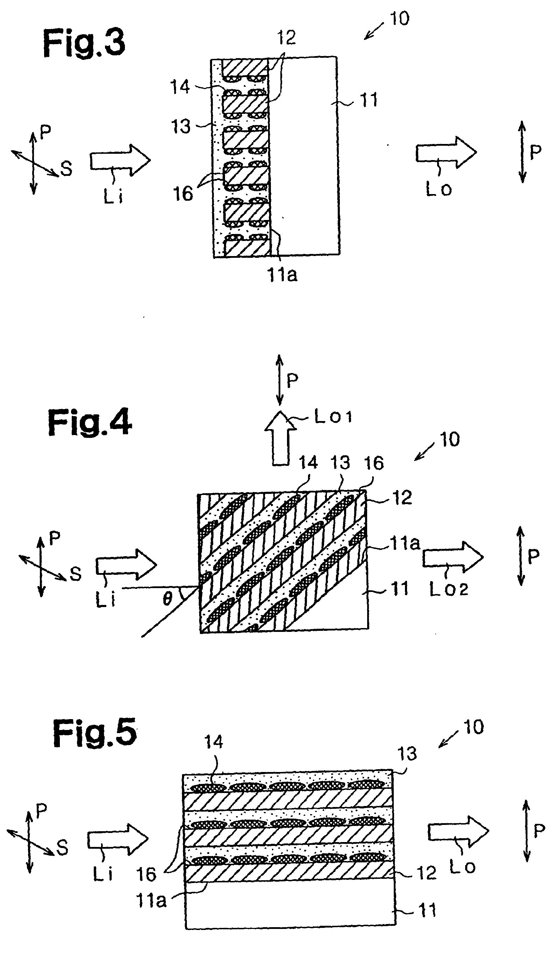

The polarization element 10 according to a second embodiment will be described hereinafter with reference to FIG. 3.

The polarization element 10 includes the glass substrate 11 having the reference surface 11a, a plurality of plate-like under films 12 projecting substantially vertically from the reference surface 11a and disposed at an equal interval, and the metal dispersed film 13 with which the plurality of plate-like under films 12 are covered. The plurality of plate-like under films 12 are formed as follows. First, the reference surface 11a is coated with the under solution, and an under layer is formed. For example, a pattern transfer is performed by exposure techniques such as flexographic patterning and photolithography, lift-off technique, electron beam drawing technique, laser drawing technique, laser two-beams flux interference exposure technique, laser abrasion, or press, and the plurality of plate-like under films 12 having a predetermined pattern are formed from the under layer. Each under film 12 extends to the inside of a sheet surface. Each under film 12 has a width of 0.1 to 2.0 µm, the under film 12 has a height of 0.1 to 20 µm, and a distance between the adjacent under films 12 is 0.1 to 2.0 µm. Therefore, a stripe structure is formed on the reference surface 11a by the plurality of under films 12.

The metal dispersed film 13 is formed so that the plurality of plate-like under films 12 are covered. The fine metal particles 14 are localized in the interface 16 between the under film 12 and the metal dispersed film 13.

As shown by an arrow on the left side of FIG. 3, an incident light Li including S polarization component and P polarization component is incident vertically upon the reference surface 11a. In this case, the polarization element 10 does not allow transmission of the S polarization component, and allows transmission of the P polarization component. That is, a transmitted light Lo shown by an arrow on the right side of FIG. 3 contains only the P polarization component.

The fine metal particle 14 is formed in the interface 16 disposed substantially vertically to the reference surface 11a. Therefore, when the pattern of the under film 12 is changed, the polarization property of the polarization element 10 can be changed. For example, instead of patterning the plurality of under films 12 in a stripe shape as shown in FIG. 3, the under film 12 may be patterned in an elliptic shape, diamond shape, or the like in accordance with the use or necessary properties.

The polarization element 10 according to a third embodiment will be described hereinafter with reference to FIG. 4.

As shown in FIG. 4, the polarization element 10 includes the glass substrate 11 having the reference surface 11a inclined with respect to an incidence direction of the light, and a plurality of under films 12 and a plurality of metal dispersed films 13 alternately laminated on the reference surface 11a. The fine metal particles 14 are formed in the interface 16 between the under film 12 and the metal dispersed film 13.

When an incident light Li inclined with respect to the reference surface 11a by an angle θ is incident upon the polarization element 10, the polarization element 10 absorbs S polarization components, transmits some of P polarization components, and reflects some of P polarization components. That is, a transmitted light Lo1 shown by an upper arrow of FIG. 4 and a transmitted light Lo2 shown by a right-side arrow contain only the P polarization components.

The polarization element 10 according to a fourth embodiment will be described hereinafter with reference to FIG. 5.

As shown in FIG. 5, the polarization element 10 includes the glass substrate 11 having the reference surface 11a, and a plurality of under films 12 and a plurality of metal dispersed films 13 laminated on the reference surface 11a. The fine metal particles 14 are formed in the interface 16 between the under film 12 and the metal dispersed film 13.

When the incident light Li parallel to the reference surface 11a is incident upon the polarization element 10, the polarization element 10 absorbs the S polarization component, and transmits the P polarization component. That is, the transmitted light Lo shown by the right-side arrow of FIG. 5 contains only the P polarization component.

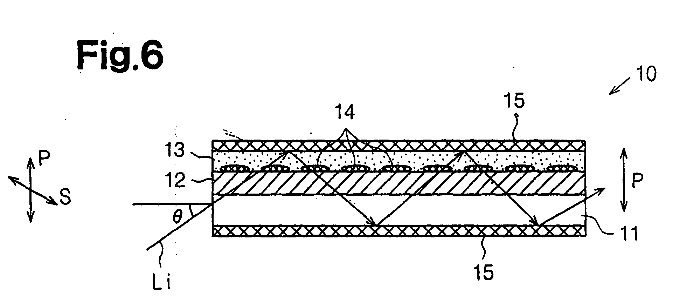

The polarization element 10 according to a fifth embodiment will be described hereinafter with reference to FIG. 6.

As shown in FIG. 6, the polarization element 10 includes the glass substrate 11 having the reference surface 11a, the under film 12 formed on the reference surface 11a, and the metal dispersed film 13 formed on the under film 12. The fine metal particles 14 are formed in the interface between the under film 12 and the metal dispersed film 13. An amplification reflective film 15 for repeatedly reflecting the incident light Li inside the polarization element is formed on a lower surface of the glass substrate 11 and an upper surface of the metal dispersed film 13.

When the incident light Li inclined with respect to the reference surface 11a by the angle θ is incident upon the polarization element 10, the incident light Li is reflected inside the polarization element 10 by two amplification reflective films 15. In this case, only the P polarization component of the incident light Li is transmitted through the polarization element 10. According to the polarization element 10 of the fifth embodiment, only the light of the P polarization component is extracted from the incident light Li, repeatedly reflected by the inner surface of each amplification reflective film 15, and can be guided to a desired place.

Examples

The present invention will be described hereinafter in more detail with reference to examples.

(Examples 1 to 3)

First, a transparent glass substrate of 10 cm $\times$ 10 cm was prepared. The under film 12 of titanium oxide, and film 13 of gold (Au) containing silicon oxide were formed on the glass substrate 11 as follows.

The glass substrate 11 was disposed in a sputtering device, and a titanium oxide target having a purity of 99.99% was used as a target. A titanium oxide film having a film thickness of 1 $\mu$m was formed on the glass substrate 11 at an evaporation speed of 40 nm/min by sputtering. The photolithography technique was used to form a pattern of line & space of 0.2 $\mu$m on the titanium oxide film as shown in FIG. 3, and the titanium oxide under film 12 was obtained.

Nine grams of 0.1 mol/l (0.1 N) hydrochloric acid, and 44 g of ethyl Cellosolve (EC) were added to 50 g of ethyl silicate (trade name, "Ethyl Silicate 40" manufactured by Colcoat Co.), and stirred at room temperature for two hours, and a mixture solution was prepared. As shown in Table 1, 7.3 g of ethyl Cellosolve, and 0.2 g of chloroauric acid were successively added to 2.5 g of the mixture solution and a metal dispersion 1 was prepared.

In Examples 2 and 3, metal dispersions 2, 3 were prepared using formulations shown in Table 1.

Subsequently, while the patterned titanium oxide under film 12 was spun at a rotation number of 1500 min$^{-1}$, the titanium oxide under film 12 was spin-coated with the metal dispersion. The metal dispersion was air-dried, thermally treated at 250°C for two hours, and calcined at 580°C for 30 minutes, so that a polarization element test piece was formed. Compositions of the under film 12 and metal dispersed film 13 are shown in Tables 2 and 3, respectively.

When a transmission-type electronic microscope (TEM) was used to observe the polarization element test piece, gold (Au) was confirmed to be displaced and deposited in the vicinity of the interface 16 of the titanium oxide film 12 and the silicon oxide film 13.

The polarization properties were evaluated using an extinction ratio defined in the following equation.

$$\text{Extinction ratio} = 10\,\text{Log}_{10}(Tp/Ts)$$

Ts is a transmittance (%) of a light in a polarization surface of an irradiation light parallel to a long axis of the fine metal particle 14, and Tp is a transmittance (%) of the light in the polarization surface of the irradiation light vertical to the long axis of the fine metal particle 14.

The film surface was wiped with a paper wiper, and in the case where stripping of the film was not found, adhesion was regarded as successful (circle mark).

When the incident light having a wavelength of 900 nm was vertically incident upon the reference surface 11a of the polarization element test piece (see FIG. 3), the polarization component (S polarization component) of the direction with the fine metal particles 14 arranged therein was more absorbed with respect to the incident light than the polarization component (P polarization component) vertical to the direction with the fine metal particles arranged therein. As can be seen from Table 4, the extinction ratio of the polarization element test piece of Example 1 in which Au concentration is relatively high is 53 dB, and the polarization element test pieces of Examples 1 to 3 have the polarization properties.

Table 1

| Composition Table of Metal Dispersion | | | |
|---|---|---|---|
| Example | Silicon oxide material | Chloroauric acid | EC |
| 1 | 2.5 g | 0.2 g | 7.3 g |
| 2 | 2.5 g | 0.056 g | 7.4 g |
| 3 | 2.5 g | 0.0053 g | 7.495 g |

Table 2

| Ratio of Each Component in Under Film 12 (mass%) | | | |
|---|---|---|---|
| Example | $SiO_2$ | $TiO_2$ | $CeO_2$ |
| 1 to 3 | 0% | 100% | 0% |

Table 3

| Ratio of Each Component in Metal Dispersed Film 13 (mass%) | | |
|---|---|---|
| Example | $SiO_2$ | Au |
| 1 | 84% | 16% |
| 2 | 95% | 5% |
| 3 | 99.5% | 0.5% |

Table 4

| Example | Absorption Wavelength | Extinction ratio | Transmission loss | Adhesion |
|---|---|---|---|---|
| 1 | 900 nm | 53 dB | 0.4 dB | o |
| 2 | 900 nm | 30 dB | 0.1 dB | o |
| 3 | 900 nm | 10 dB | 0.3 dB | o |

(Example 4)

First, the transparent glass substrate 11 of 10 cm x 10 cm was prepared. The under film 12 of titanium oxide, and film 13 of gold (Au) containing silicon oxide were formed on the glass substrate 11 as follows.

The glass substrate 11 was disposed in the sputtering device, and a titanium oxide target having a purity of 99.99% was used as the target. The titanium oxide under film 12 having a film thickness of 200 nm was formed on the glass substrate 11 at an evaporation speed of 2 nm/min by sputtering.

While the glass substrate 11 was spun at a rotation number of 1500 min[-1], the titanium oxide under film 12 was spin-coated with the metal dispersion of Example 1. After the metal dispersion was air-dried, the glass substrate 11 was thermally treated at 250°C for two hours, and calcined at 580°C for 30 minutes. Sputtering and spin coating were repeated ten times. Thereby, the polarization element test piece was formed in which the titanium oxide under film 12 and Au fine particles containing silicon oxide film 13 were alternately laminated. The composition of the test piece in a depth direction was analyzed by X-ray photo-electron spectral analysis, and it was then confirmed that gold was present in the interface of titanium oxide and silicon oxide.

As shown in Table 5, the polarization element test piece was irradiated with the light at an incidence angle θ of 10° to 60°, the component (S polarization component) of the light parallel to the reference surface 11a was absorbed more than the component (P polarization component) of the light vertical to the reference surface 11a, and it was confirmed that the polarization element test piece had the polarization properties. Moreover, when the incidence angle θ was changed, the absorption wavelength of the incident light having a wavelength of 610 nm to 800 nm shifted to a long wavelength side. This is supposedly reflected by a fact that an apparent aspect ratio of the gold fine particles 14 is large. The incidence angle θ is an angle formed by the reference surface 11a and incident light as shown in FIG. 4.

Table 5

| Example | Incidence angle | Absorption wavelength | Extinction ratio | Transmission loss | Adhesion |
|---|---|---|---|---|---|
| 4 | 60° | 610 nm | 12 dB | 0.1 dB | o |
| 4 | 45° | 650 nm | 14 dB | 0.2 dB | o |
| 4 | 30° | 730 nm | 11 dB | 0.4 dB | o |
| 4 | 10° | 800 nm | 13 dB | 0.1 dB | o |

(Examples 5 to 8)

Six grams of 0.1 mol/l (0.1 N) hydrochloric acid, and 44 g of ethyl Cellosolve (EC) were added to 50 g of ethyl silicate (trade name, "Ethyl Silicate 40" manufactured by Colcoat Co.), and stirred at room temperature for two hours, and a silicon oxide stock solution was prepared. A silicon oxide solid content in the silicon oxide stock solution is 20 mass%.

Subsequently, 1 mol of titanium isopropoxide was stirred, 2 mols of acetylacetone were added dropwise with a dropping funnel, and a titanium oxide stock solution was prepared. A titanium oxide solid content in the titanium oxide stock solution is 16.5 mass%.

Three mols of acetylacetone was added to 1 mol of cerium nitrate 6 hydrate, and stirred at 90°C for one hour to prepare a cerium nitrate stock solution. A cerium oxide solid content in the cerium nitrate stock solution is 23.2 mass%.

The stock solutions were used to prepare under solutions 5 to 8 shown in Tables 6, 7. Table 6 shows a composition amount of the stock solution, and Table 7 shows the ratio (converted in terms of oxide, mass%) of each compound in the under film 12.

Table 6

| Example | Silicon oxide material | Titanium oxide material | Cerium oxide material | EC |
|---|---|---|---|---|
| 5 | 0.99 g | 1.59 g | 1.68 g | 5.74 g |
| 6 | 2.02 g | 1.09 g | 1.15 g | 5.74 g |
| 7 | 2.56 g | 0.82 g | 0.87 g | 5.75 g |
| 8 | 2.89 g | 0.66 g | 0.70 g | 5.75 g |

Table 7

| Example | $SiO_2$ | $TiO_2$ | $CeO_2$ |
|---|---|---|---|
| 5 | 23.2% | 30.8% | 46.0% |
| 6 | 47.5% | 21.1% | 31.4% |
| 7 | 60.2% | 16.0% | 23.8% |
| 8 | 67.9% | 12.9% | 19.2% |

The glass substrate 11 was gravure-coated with the under solutions 5 to 8 so as to obtain a film thickness of 1 μm. The film was air-dried, thermally treated at 250°C for two hours, and calcined at 500°C for 30 minutes, so that the under film 12 was formed. For the under film 12, the photolithography technique was used to form the line & space pattern of 0.20 μm as shown in FIG. 3.

The patterned under film 12 was spun at a rotation number of 1500 min$^{-1}$, while the under film 12 was spin-coated with the metal dispersion of Example 1. The film was air-dried, thermally treated at 250°C for two hours, and calcined at 580°C for 30 minutes, so that the polarization element test piece was formed.

When the incident light having a wavelength of 1000 nm to 1500 nm was vertically irradiated upon the reference surface 11a of the polarization element test piece (see FIG. 3), the polarization component (S polarization component) of the direction with the fine metal particles 14 arranged therein was more absorbed with respect to the incident light than the polarization component (P polarization component) vertical to the direction with the fine metal particles arranged therein. As can be seen from Table 8, the extinction ratio of the polarization element test piece of Example 5 is 48 dB. It has been found that the polarization element test pieces of Examples 5 to 8 have the polarization properties.

Table 8

| Example | Absorption Wavelength | Extinction ratio | Transmission loss | Adhesion |
|---|---|---|---|---|
| 5 | 1500 nm | 48 dB | 0.3 dB | o |
| 6 | 1300 nm | 43 dB | 0.4 dB | o |
| 7 | 1200 nm | 45 dB | 0.3 dB | o |
| 8 | 1000 nm | 42 dB | 0.2 dB | o |

As can be seen from FIG. 8, when $SiO_2$ concentration in the under film 12 increases, the absorption wavelength shifts to a short wavelength side. This is related to a fact that the particle diameter of the fine metal particle 14 deposited in the interface 16 decreases with the increase of the $SiO_2$ concentration. In detail, this is considered to occur because with the increase of the $SiO_2$ concentration, a ratio (aspect ratio) of a size of the fine metal particle 14 of a direction parallel to the reference surface 11a to a size of a thickness direction decreases.

Therefore, when the composition of the under film 12 is changed, the aspect ratio of the fine metal particle 14 can be controlled. As a result, there is provided the polarization element 10 which fulfills the polarization capability with respect to the wavelength of a broad range.

(Examples 9 to 11)

The patterned titanium oxide under film 12 of Example 1 was spin-coated with the metal dispersion prepared as shown in Table 9 at a rotation speed of 1500 $min^{-1}$. Additionally, 38.7 g of tetrabutoxy zirconium and 26.0 g of ethyl acetylacetate were stirred for two hours, and a zirconium stock solution was prepared beforehand. A zirconium oxide solid content in the zirconium oxide stock solution (zirconium stock solution) is 19.0 mass%.

Subsequently, the metal dispersion was air-dried, the substrate 11 was thermally treated at 250°C for two hours, the fine metal particles 14 were deposited in the interface, and the substrate was further calcined at 580°C for 30 minutes to obtain the polarization element test piece.

The TEM was used to observe the polarization element test piece, and it was confirmed that gold was localized in the interface 16 between the under film 12 and the silicon oxide/zirconium oxide film 13.

The polarization element test piece was irradiated with the incident light Li vertical to the reference surface 11a. Then, as shown in Table 11, it has been confirmed that the polarization element test piece has the polarization properties having a maximum extinction ratio of 55 dB with respect to the incident light having a wavelength of 850 nm to 750 nm.

Table 9

| Formulation Amount of Metal Dispersion | | | | |
|---|---|---|---|---|
| Example | Silicon oxide material | Zirconium oxide material | Chloroauric acid | EC |
| 9 | 2.25 g | 0.26 g | 0.2 g | 7.3 g |
| 10 | 1.25 g | 1.31 g | 0.2 g | 7.2 g |
| 11 | 0.75 g | 1.83 g | 0.2 g | 7.2 g |

Table 10

| Composition of Metal Dispersed Film 13 (conversion in terms of oxide, mass%) | | | |
|---|---|---|---|
| Example | $SiO_2$ | $ZrO_2$ | Au |
| 9 | 75.6% | 8.4% | 16.0% |
| 10 | 42.0% | 42.0% | 16.0% |
| 11 | 8.4% | 75.6% | 16.0% |

Table 11

| Example | Absorption wavelength | Extinction ratio | Transmission loss | Adhesion |
|---|---|---|---|---|
| 9 | 850 nm | 43 dB | 0.4 dB | o |

Table 11   (continued)

| Example | Absorption wavelength | Extinction ratio | Transmission loss | Adhesion |
|---|---|---|---|---|
| 10 | 800 nm | 45 dB | 0.3 dB | o |
| 11 | 750 nm | 55 dB | 0.2 dB | o |

From the results of Examples 9 to 11, a difference between an action of zirconium oxide for depositing the fine metal particles 14 in the vicinity of the interface 16, and an action of silicon oxide for depositing the fine metal particles 14 in the interface 16 has been clarified. In detail, it is found that zirconium oxide has an action of reducing the size of the fine metal particle 14 as compared with silicon oxide. With the increase of the concentration of zirconium oxide, the fine metal particle 14 positioned in the interface 16 becomes small, and the apparent aspect ratio of the fine metal particles 14 is reduced. As a result, it is supposed that the absorption wavelength shifts to a short wavelength side. This indicates that the aspect ratio of the fine metal particles 14 can be controlled by adjusting the amount of zirconium oxide.

(Example 12)

First, the transparent glass substrate 11 of 10 cm × 10 cm was prepared. In a method similar to the method of Example 1, the titanium oxide under film 12 having a pattern of line & space of 0.20 μm was formed on the glass substrate 11.
Nine grams of 0.1 mol/l (0.1 N) nitric acid, and 44 g of ethyl Cellosolve (EC) were added to 50 g of ethyl silicate (trade name, "Ethyl Silicate 40" manufactured by Colcoat Co.), and stirred at room temperature for two hours to prepare a silicon oxide stock solution. 6.5 g of ethyl Cellosolve, and 1.0 g of ethylene glycol solution containing 20 mass% of silver nitrate were added to 2.5 g of the silicon oxide stock solution to prepare the metal dispersion.
The patterned titanium oxide under film 12 was spin-coated with the metal dispersion.
The metal dispersion was air-dried, an ultraviolet (UV) irradiation device manufactured by USHIO Co. was used to emit an ultraviolet ray having a central wavelength of 365 nm for about 30 seconds so that an ultraviolet strength in the surface of the dried metal dispersion was 10 mW/cm$^2$, and the silver (Ag) fine particles 14 were deposited in the interface 16. Furthermore, the glass substrate 11 was heated at 300°C for 20 minutes, and the polarization element test piece was obtained.
The polarization element test piece was observed by the TEM, and it was confirmed that silver (Ag) was displaced/deposited in the interface 16 between the titanium oxide under film 12 and the silicon oxide film 13.
The polarization element test piece was irradiated with the incident light Li vertical to the reference surface 11a. Then, as shown in Table 13, it has been confirmed that the polarization element test piece has polarization properties with a maximum extinction ratio of 51 dB with respect to the incident light having a wavelength of 800 nm. It should be noted that Table 12 shows the composition of the metal dispersed film 13.

Table 12

| Composition of Metal Dispersed Film 13 (conversion in terms of oxide, mass%) | | |
|---|---|---|
| Example | SiO$_2$ | Ag |
| 12 | 80.6% | 19.4% |

Table 13

| Example | Absorption wavelength | Extinction ratio | Transmission loss | Adhesion |
|---|---|---|---|---|
| 12 | 800 nm | 51 dB | 0.2 dB | o |

From the result of Example 12, it has been found that the polarization properties are obtained by the fine silver particles 14 deposited in the interface 16. Moreover, when the composition of the under film 12 or the composition of the metal dispersion is changed similarly to the case of gold, the deposition of the fine silver particles 14 is controlled. It is therefore found that the polarization properties of the polarization element test piece can be controlled.
Furthermore, a metal ion (gold or silver) of the metal dispersion is decomposed and reduced, and the fine metal particles 14 are deposited. It has been found that similarly to the heating, the irradiation with the electromagnetic wave such as the ultraviolet ray is also effective for the decomposition and reduction of the metal ion.

(Example 13)

Ten grams of bismuth nitrate was dissolved in 19.0 g of acetylacetone and a bismuth nitrate stock solution was prepared. A bismuth oxide solid content in the bismuth nitrate stock solution is 25.2 mass%.

16.9 g of bismuth nitrate stock solution, and 6.5 g of titanium oxide stock solution used in Examples 5 to 8 were mixed and 76.5 g of ethyl Cellosolve was added to prepare the under solution.

The glass substrate 11 was gravure-coated with the under solution so that the film thickness was 1/6 μm. The under solution was air-dried, heated at 250°C, and dried. The gravure coating and heating drying were repeated six times and the film was calcined at 500°C for 30 minutes to form the titanium oxide-bismuth oxide under film 12 having a film thickness of 1 μm.

The photolithography technique was used to form the pattern of the line & space of 0.2 μm on the under film 12 as shown in FIG. 3. The under film 12 was spin-coated with the metal dispersion of Example 1. The metal dispersion was air-dried, and thermally treated at 250°C for two hours, and the gold fine particles were deposited in the interface. The glass substrate 11 was calcined at 580°C for 30 minutes to obtain the polarization element test piece.

The polarization element test piece was irradiated with the incident light Li vertical to the reference surface 11a. Then, as shown in Table 15, it has been confirmed that the polarization element test piece has polarization properties with a maximum extinction ratio of 45 dB with respect to the incident light having a wavelength of 630 nm. Table 14 shows the composition of the under film 12.

Table 14

| Example | $TiO_2$ | $Bi_2O_5$ |
|---------|---------|-----------|
| 13 | 15% | 85% |

Table 15

| Example | Absorption wavelength | Extinction ratio | Transmission loss | Adhesion |
|---------|----------------------|------------------|-------------------|----------|
| 13 | 630 nm | 45 dB | 0.1 dB | o |

(Example 14)

The transparent glass substrate 11 of 10 cm × 10 cm was prepared. The glass substrate 11 was disposed in a chemical vapor-phase deposition (CVD) device, monobutyltin trichloride was used as a raw material, and the tin oxide under film 12 having a film thickness of 2 μm was formed.

The lift-off technique was used, and the pattern of the line & space of 0.5 μm shown in FIG. 3 was formed in the tin oxide under film 12. The tin oxide under film 12 was spin-coated with the metal dispersion of Example 1. The metal dispersion was air-dried, the glass substrate 11 was thermally treated at 250°C for two hours, the fine metal particles 14 were deposited in the interface 16 and further the glass substrate 11 was calcined at 580°C for 30 minutes to obtain the polarization element test piece.

The polarization element test piece was irradiated with the incident light Li vertical to the reference surface 11a. Then, as shown in Table 16, it has been confirmed that the polarization element test piece has polarization properties with a maximum extinction ratio of 55 dB with respect to the incident light having a wavelength of 800 nm.

Table 16

| Table of Polarization Properties | | | | |
|---------|----------------------|------------------|-------------------|----------|
| Example | Absorption wavelength | Extinction ratio | Transmission loss | Adhesion |
| 14 | 800 nm | 55 dB | 0.1 dB | o |

(Comparative Example 1)

The glass substrate 11 of 10 cm x 10 cm was prepared. The glass substrate 11 was disposed in the sputtering device, and the silicon oxide target having a purity of 99.99% was used as the target. The silicon oxide under film 12 having a film thickness of 1 μm was formed on the glass substrate 11 at an evaporation speed of 40 nm/min.

The photolithography technique was used to form the pattern of line & space of 0.2 μm on the silicon oxide under film 12 as shown in FIG. 3. While the glass substrate 11 was spun at a rotation number of 1500 min[-1], the silicon oxide under film 12 was spin-coated with the metal dispersion of Example 1. The metal dispersion was air-dried, the glass substrate 11 was thermally treated at 250°C for two hours and the metal dispersed film 13 was formed to obtain the test piece. However, the gold (Au) fine particles were not deposited in the interface 16.

The TEM was used to observe the structure of the test piece, and it was confirmed that gold was uniformly dispersed in the metal dispersed film 13.

The test piece was irradiated with the incident light Li vertical to the reference surface 11a. However, as shown in Table 18, it has been found that the test piece has no clear polarization properties.

(Comparative Example 2)

The glass substrate 11 of 10 cm × 10 cm was prepared. After 0.06 g of titanium oxide stock solution was added to 2.45 g of the silicon oxide stock solution used in Examples 5 to 8 and 7.49 g of ethyl Cellosolve was added to prepare the under solution.

The glass substrate 11 was gravure-coated with the under solution so as to obtain a film thickness of 1 μm. After the substrate was air-dried, the substrate was thermally treated at 250°C for two hours, and further calcined at 500°C for 30 minutes, and the under film 12 was formed. Table 17 shows the composition (conversion in terms of oxide) of the under film 12. The photolithography technique was used to form the pattern of line & space of 0.20 μm on the under film 12 as shown in FIG. 3.

Subsequently, the patterned under film 12 was spin-coated with the metal dispersion of Example 1 at a rotation number of 1500 min⁻¹. The metal dispersion was air-dried and the substrate was thermally treated at 250°C for two hours to obtain the test piece with the metal dispersed film 13 formed thereon. In the test piece, the gold (Au) fine particles were not displaced/deposited in the interface 16 to present pink color.

The TEM was used to observe the structure of the test piece, and it was confirmed that gold was uniformly dispersed in the metal dispersed film 13.

The test piece was irradiated with the incident light Li vertical to the reference surface 11a. However, as shown in Table 18, it has been found that the test piece has no clear polarization properties.

Table 17

| Comparative example | SiO$_2$ | TiO$_2$ |
|---|---|---|
| 1 | 100% | 0% |
| 2 | 98.05% | 1.95% |

Table 18

| Comparative example | Absorption wavelength | Extinction ratio | Transmission loss | Adhesion |
|---|---|---|---|---|
| 1 | 550 nm | 0.8 dB | 0.1 dB | o |
| 2 | 560 nm | 0.9 dB | 0.3 dB | o |

As can be seen from Comparative Examples 1 and 2, the fine metal particles are not deposited in the vicinity of the interface 16, when the under film 12 is formed only of silicon oxide, and when the content of titanium oxide converted in terms of TiO$_2$ in the under film 12 is less than 2 mass%. Therefore, in order to selectively deposit the fine metal particles in the interface, it has been confirmed that the necessary content of titanium oxide converted in terms of TiO$_2$ is at least 2 mass% or more.

(Comparative Examples 3, 4)

The glass substrate 11 of 10 cm x 10 cm was prepared. The glass substrate 11 was disposed in the sputtering device, and the titanium oxide target having a purity of 99.99% was used as the target. The titanium oxide under film 12 having a film thickness of 1 μm was formed on the glass substrate 11 at an evaporation speed of 40 nm/min by sputtering.

The photolithography technique was used to form the pattern of line & space of 0.2 μm on the under film 12 as shown in FIG. 3. The metal dispersion having a composition shown in Table 19 was prepared. Subsequently, while the glass substrate 11 was spun at a rotation number of 1500 min⁻¹, the patterned under film 12 was spin-coated with the metal dispersion. The metal dispersion was air-dried and the glass substrate 11 was thermally treated at 250°C for two hours to obtain the test piece with the metal dispersed film formed thereon. Table 20 shows the composition of the metal dispersed film (conversion in terms of oxide).

The test piece was irradiated with the incident light Li vertical to the reference surface 11a, and the polarization

**EP 1 310 806 A1**

capability was determined. Results are shown in Table 21. In Comparative Example 3, obvious plasmon absorption was not observed. In Comparative Example 4, the thin film obtained by condensation/polymerization of the silicon oxide material by thermal treatment was stripped from the substrate, and the uniform film was not formed.

It has been confirmed from Comparative Examples 3 and 4 that when the gold (Au) concentration is too low, the size of the fine metal particle is reduced, and the sufficient polarization properties are not produced; or that when the gold concentration is too high, the adhesion to the under film is lowered and the uniform film cannot be formed.

Table 19

| Formulation of Metal Dispersion | | | |
|---|---|---|---|
| Comparative example | Silicon oxide material | Chloroauric acid | EC |
| 3 | 2.5 g | 0.0020 g | 7.5 g |
| 4 | 2.5 g | 1.10 g | 6.4 g |

Table 20

| Composition of Metal Dispersed Film 13 (conversion in terms of oxide, mass%) | | |
|---|---|---|
| Comparative example | $SiO_2$ | Au |
| 3 | 99.81% | 0.19% |
| 4 | 49.3% | 50.7% |

Table 21

| Comparative example | Absorption wavelength | Extinction ratio | Transmission loss | Adhesion |
|---|---|---|---|---|
| 3 | - | 0.001 dB | 0.002 dB | o |
| 4 | - | cannot be evaluated | | × |

According to the present invention, the following advantage is obtained.

The main component of the under film 12 is selected from the under film material group A and/or B, and the main component of the metal dispersed film 13 is a compound of at least one element selected from the fine metal particle source and metal dispersed film material group. When the metal dispersed film 13 is formed by the thermal treatment or the electromagnetic wave irradiation, the fine metal particles 14 are deposited in the interface 16 between the under film 12 and the metal dispersed film 13. As a result, the polarization element 10 having desired polarization properties is obtained.

The metal dispersed film 13 strongly adheres to the under film 12, and therefore there is provided the durable polarization element 10 in which the thin film is not easily stripped.

Since the thin film layers 12, 13 having desired sizes can be formed on the glass substrate 11, the polarization element 10 having a relatively large polarization surface is provided. Therefore, the polarization element 10 can be used in a wide range of applications.

**Claims**

1. A method of manufacturing a polarization element (10), comprising the steps of:

    forming an under film (12) containing a component which attracts a fine metal particle (14) on a transparent substrate (11);
    coating the under film with a metal dispersion and forming a metal dispersed film (13); and
    depositing the fine metal particle (14) in a film interface (16) between the under film and said metal dispersed film.

2. A method of manufacturing a polarization element (10), comprising the steps of:

    forming an under film (12) which contains at least one compound selected from the group consisting of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc. oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide as a main component on a transparent substrate (11);

preparing a metal dispersion which contains a compound of at least one element selected from the group consisting of silicon, zirconium, titanium, cerium, tin, bismuth, cobalt, copper, aluminum, magnesium, manganese, chromium, indium, vanadium, iron, nickel, zinc, tungsten, tantalum, hafnium, barium, ytterbium, niobium, molybdenum, yttrium, ruthenium, germanium, lead, and boron, and a fine metal particle source as main components;

coating said under film with said metal dispersion; and

subjecting said metal dispersion to at least one of heating and electromagnetic wave irradiation, and forming a metal dispersed film (13) in which a fine metal particle (14) is localized in a film interface (16) between said under film and said metal dispersed film.

3. The method of manufacturing the polarization element according to claim 1 or 2, wherein said under film contains at least one of silicon oxide and zirconium oxide.

4. The method of manufacturing the polarization element according to any one of claims 1 to 3, wherein said step of forming the under film comprises a step of preparing an under solution so that said under film contains 2 to 100 mass% of at least one compound selected from the group consisting of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide, and 0 to 98 mass% of at least one compound selected from the group consisting of silicon oxide and zirconium oxide.

5. The method of manufacturing the polarization element according to any one of claims 1 to 4, wherein said step of preparing the metal dispersion comprises a step of blending respective components so that said metal dispersed film contains 0.2 to 50 mass% of the fine metal particle, and contains 50 to 99.8 mass% of at least one compound selected from the group consisting of silicon oxide, zirconium oxide, titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide.

6. The method of manufacturing the polarization element according to claim 1 or 2, wherein said fine metal particle is a noble metal.

7. The method of manufacturing the polarization element according to claim 1 or 2, wherein said metal dispersion contains a metal ion which generates said fine metal particle by reduction.

8. A method of manufacturing a polarization element, comprising the steps of:

forming an under film (12) on a transparent substrate (11);
forming a metal dispersed film (12) containing a fine metal particle (14) on said under film; and
localizing said fine metal particle in a film interface (16) between the metal dispersed film and said under film.

9. The method according to claim 8, wherein said step of localizing the fine metal particle comprises a step of heating said metal dispersed film.

10. The method according to claim 8, wherein said step of localizing the fine metal particle comprises a step of irradiating said metal dispersed film with an electromagnetic wave.

11. A polarization element (10) comprising:

a transparent substrate (11);
an under film (12) formed on said transparent substrate, and containing a component which attracts a fine metal particle (14); and

a metal dispersed film (13) formed on said under film, wherein said metal dispersed film contains the fine metal particle (14) localized in a film interface (16) between said under film and said metal dispersed film.

12. The polarization element according to claim 11, wherein said under film contains at least one compound selected from the group consisting of titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide as a main component, and said metal dispersed film contains 0.2 to 50 mass% of said fine metal particle, and contains 50 to 99.8 mass% of at least one compound selected from the group consisting of silicon oxide, zirconium oxide, titanium oxide, cerium oxide, tin oxide, bismuth oxide, cobalt oxide, copper oxide, aluminum oxide, magnesium oxide, manganese oxide, chromium oxide, indium oxide, vanadium oxide, iron oxide, nickel oxide, zinc oxide, tungsten oxide, tantalum oxide, hafnium oxide, barium oxide, ytterbium oxide, niobium oxide, molybdenum oxide, yttrium oxide, ruthenium oxide, germanium oxide, lead oxide, and boron oxide.

13. A method of manufacturing the polarization element as set forth in claim 11, wherein said under film contains at least one of silicon oxide and zirconium oxide.

# Fig.1

# Fig.2

# Fig.3

# Fig.4

# Fig.5

EP 1 310 806 A1

# Fig.6

## INTERNATIONAL SEARCH REPORT

| | International application No. |
|---|---|
| | PCT/JP01/06588 |

**A. CLASSIFICATION OF SUBJECT MATTER**
Int.Cl⁷ G02B5/30

According to International Patent Classification (IPC) or to both national classification and IPC

**B. FIELDS SEARCHED**

Minimum documentation searched (classification system followed by classification symbols)
Int.Cl⁷ G02B5/30

Documentation searched other than minimum documentation to the extent that such documents are included in the fields searched
Jitsuyo Shinan Koho          1926-1996      Toroku Jitsuyo Shinan Koho  1994-2001
Kokai Jitsuyo Shinan Koho  1971-2001      Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-119043 A (Nippon Sheet Glass Company, Limited), 25 April, 2000 (25.04.00), Full text (Family: none) | 1-13 |
| A | JP 9-278488 A (Nippon Sheet Glass Company, Limited), 28 October, 1997 (28.10.97), Full text; all drawings (Family: none) | 1-13 |
| X | JP 7-301710 A (Tokin Corporation), 14 November, 1995 (14.11.95), Full text; all drawings (Family: none) | 11-13 |

☐ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 17 October, 2001 (17.10.01) | 30 October, 2001 (30.10.01) |

| Name and mailing address of the ISA/ | Authorized officer |
|---|---|
| Japanese Patent Office | |
| Facsimile No. | Telephone No. |

Form PCT/ISA/210 (second sheet) (July 1992)